# EUROPEAN PATENT APPLICATION

(11) **EP 4 811 432 A2**
(43) Date of publication of application: **23.09.2026**
(21) Application number: 26155148.5
(22) Date of filing: 29.01.2026
(51) Int. Cl.: H01M 4/04, H01M 4/13, H01M 4/134, H01M 4/1395, H01M 4/36, H01M 4/38, H01M 10/0562

(54) **METHOD FOR PRODUCING ELECTRODE ACTIVE MATERIAL LAYER, ELECTRODE ACTIVE MATERIAL LAYER, AND BATTERY**

(30) Priority: 21.03.2025 JP 2025046910
(71) Applicant: Toyota Jidosha Kabushiki Kaisha, Toyota-shi, Aichi-ken 471-8571 (JP)
(72) Inventor: KUDO, So, TOYOTA-SHI, AICHI-KEN, 471-8571 (JP); NOMOTO, Kazushige, TOYOTA-SHI, AICHI-KEN, 471-8571 (JP)
(74) Representative: Cabinet Beau de Loménie

(57) **Abstract**

The present disclosure provides a method for producing an electrode active material layer capable of alleviating the influence of expansion and contraction of an alloy-based electrode active material. The method of the present disclosure for producing an electrode active material layer includes: providing an electrode mixture slurry containing alloy-based electrode active material particles, wherein a value of d50 particle diameter/thickness is from 0.10 to 0.50; blade-coating the electrode mixture slurry with first and second blades having irregularities extending in a width direction of the electrode active material layer to form first and second preliminary electrode active material layers having a plurality of first and second thick film portions and a plurality of first and second thin film portions; and laminating them so that the first thick film portions and the second thin film portions, and the first thin film portions and the second thick film portions face each other.

## Description

### TECHNICAL FIELD

The present disclosure relates to a method for producing an electrode active material layer, an electrode active material layer, and a battery.

### BACKGROUND

As disclosed in PTL 1, it is known that an alloy-based electrode active material such as silicon or tin expands and contracts during charging and discharging of a battery.

### [CITATION LIST]

### [PATENT LITERATURE]

[PTL 1] Japanese Unexamined Patent Publication (Kokai) No. 2019-121557

### SUMMARY

### [TECHNICAL PROBLEM]

An object of the present disclosure is to provide a method for producing an electrode active material layer capable of alleviating the influence of expansion and contraction of an alloy-based electrode active material, an electrode active material layer, and a battery.

The present inventors have found that this object can be achieved by the following means.

### <Aspect 1>

A method for producing an electrode active material layer, including:
providing an electrode mixture slurry containing alloy-based electrode active material particles and a dispersion medium, wherein a ratio of a d50 particle diameter of the alloy-based electrode active material particles to a thickness of the electrode active material layer is from 0.10 to 0.50;
blade-coating the electrode mixture slurry on a first substrate with a first blade having irregularities extending in a width direction of the electrode active material layer to form on the first substrate, a first preliminary electrode active material layer having a plurality of first thick film portions and a plurality of first thin film portions;
blade-coating the electrode mixture slurry on a second substrate with a second blade having irregularities extending in a width direction of the electrode active material layer to form on the second substrate, a second preliminary electrode active material layer having a plurality of second thick film portions and a plurality of second thin film portions; and
laminating the first preliminary electrode active material layer and the second preliminary electrode active material layer so that the first thick film portions and the second thin film portions face each other, and the first thin film portions and the second thick film portions face each other.

### <Aspect 2>

The method according to aspect 1,
wherein the alloy-based electrode active material particles have a d50 particle diameter of 5 µm to 15 µm, and
wherein the electrode active material layer has a thickness of 10 µm to 100 µm.

### <Aspect 3>

An electrode active material layer, including alloy-based electrode active material particles, wherein
a ratio of an average particle diameter of the alloy-based electrode active material particles to a thickness of the electrode active material layer is from 0.20 to 1.0 in a cross-sectional SEM image, the average particle diameter of the alloy-based electrode active material particles being an average value of particle diameters of at least 5 alloy-based electrode active material particles extracted in descending order of particle diameter in the cross-sectional SEM image, the cross-sectional SEM image is an image of the electrode active material layer for a width of 2.3 times a thickness of the electrode active material layer, and
when the cross-sectional SEM image is virtually divided into 12 equal regions in a width direction of the electrode active material layer, a difference between a maximum value and a minimum value of area proportions of the alloy-based electrode active material particles in the 12 divided regions is 0.40 or less.

### <Aspect 4>

The electrode active material layer according to aspect 3, wherein the difference is 0.25 or less.

### <Aspect 5>

The electrode active material layer according to aspect 3 or 4, wherein an interquartile range of the area proportions of the alloy-based electrode active material particles in the divided regions of the cross-sectional SEM image is 0.15 or less.

### <Aspect 6>

The electrode active material layer according to any one of aspects 3 to 5, wherein a variance of the area proportions of the alloy-based electrode active material particles in the divided regions of the cross-sectional SEM image is 0.015 or less.

### <Aspect 7>

The electrode active material layer according to any one of aspects 3 to 6, wherein a value obtained by dividing an area proportion of the alloy-based electrode active material particles in the entire cross-sectional SEM image by the maximum value of the area proportions of the alloy-based electrode active material particles in the divided regions of the cross-sectional SEM image is 0.70 or more.

### <Aspect 8>

The electrode active material layer according to any one of aspects 3 to 7, wherein the alloy-based electrode active material particles are silicon electrode active material particles.

### <Aspect 9>

The electrode active material layer according to any one of aspects 3 to 8, wherein the alloy-based electrode active material particles each are a secondary particle including a plurality of electrode active material primary particles.

### <Aspect 10>

The electrode active material layer according to aspect 9, wherein the secondary particle further includes a binder.

### <Aspect 11>

A battery, including the electrode active material layer according to any one of aspects 3 to 10.

### <Aspect 12>

The battery according to aspect 11, wherein the battery is a solid-state battery.

### [ADVANTAGEOUS EFFECTS OF INVENTION]

According to the present disclosure, it is possible to provide a method for producing an electrode active material layer capable of alleviating the influence of expansion and contraction of an alloy-based electrode active material, an electrode active material layer, and a battery.

### BRIEF DESCRIPTION OF DRAWINGS

Fig. 1A is a schematic cross-sectional view illustrating a method for forming a first preliminary electrode active material layer.
Fig. 1B is a schematic cross-sectional view illustrating a method for forming a second preliminary electrode active material layer.
Fig. 1C is a schematic cross-sectional view illustrating a method for laminating a first preliminary electrode active material layer and a second preliminary electrode active material layer.
Fig. 1D is a schematic cross-sectional view showing an example of an electrode active material layer produced by the method of the present disclosure.
Fig. 2 is a histogram of area proportions of alloy-based electrode active material particles in the 12 divided regions in Examples and Comparative Examples.
Fig. 3 is a graph showing a restraint pressure increase amount of the batteries of Examples and Comparative Examples.

### DESCRIPTION OF EMBODIMENTS

Hereinafter, embodiments of the present disclosure will be described in detail. However, it should be noted that the present disclosure is not limited to the following embodiments, and can be variously modified within the scope thereof.

### <<Method for Producing Electrode Active Material Layer>>

The method of the present disclosure for producing an electrode active material layer includes the steps of: providing an electrode mixture slurry containing alloy-based electrode active material particles and a dispersion medium, wherein a ratio of a d50 particle diameter of the alloy-based electrode active material particles to a thickness of the electrode active material layer is from 0.10 to 0.50; blade-coating the electrode mixture slurry on a first substrate with a first blade having irregularities extending in a width direction of the electrode active material layer to form a first preliminary electrode active material layer having a plurality of first thick film portions and a plurality of first thin film portions on the first substrate; blade-coating the electrode mixture slurry on a second substrate with a second blade having irregularities extending in a width direction of the electrode active material layer to form a second preliminary electrode active material layer having a plurality of second thick film portions and a plurality of second thin film portions on the second substrate; and laminating the first preliminary electrode active material layer and the second preliminary electrode active material layer so that the first thick film portions and the second thin film portions face each other, and the first thin film portions and the second thick film portions face each other.

The present inventors have considered that, when a plurality of alloy-based electrode active material particles having relatively large particle diameters are disposed so as to overlap in the thickness direction of the electrode active material layer, a portion where the influence of expansion and contraction of the alloy-based electrode active material particles locally increases may be generated in the width direction of the electrode active material layer. Such a problem is considered to be particularly remarkable when the ratio of the d50 particle diameter of the alloy-based electrode active material particles to the thickness of the electrode active material layer (hereinafter, sometimes simply referred to as "value of d50 particle diameter/thickness") is relatively large.

In contrast, the present inventors have found that, according to the method of the present disclosure described above, an electrode active material layer in which the influence of expansion and contraction of the alloy-based electrode active material is alleviated can be produced. The reason for this is not intended to be bound by any theory, but is presumed to be as follows. Specifically, in the preliminary electrode active material layer formed by coating with a blade having irregularities, it is considered that the alloy-based electrode active material particles having relatively large particle diameters are disposed in the thick film portion, and the alloy-based electrode active material particles having relatively small particle diameters are disposed in the thin film portion. It is considered that by laminating a pair of preliminary electrode active material layers each having such a thick film portion and a thin film portion so that the thick film portion and the thin film portion face each other, the alloy-based electrode active material particles having relatively large particle diameters can be disposed so as not to overlap in the thickness direction of the electrode active material layer. It is considered that, even when the value of d50 particle diameter/thickness is relatively large, the occurrence of a portion where the influence of expansion and contraction of the alloy-based electrode active material particles locally increases in the width direction of the electrode active material layer can be suppressed.

In the present disclosure, the "electrode active material layer" may be a "positive electrode active material layer" or a "negative electrode active material layer", particularly a "negative electrode active material layer". Therefore, the "electrode active material" may be a "positive electrode active material" or a "negative electrode active material", particularly a "negative electrode active material".

Hereinafter, the method of the present disclosure for producing an electrode active material layer will be described with reference to the drawings. The dimensional relationships in the drawings do not reflect actual dimensional relationships.

### <Provision of Slurry>

The method of the present disclosure includes providing an electrode mixture slurry containing alloy-based electrode active material particles and a dispersion medium.

In the present disclosure, the "electrode mixture" refers to a composition that can constitute an electrode active material layer as it is or by further containing other components. In the present disclosure, the "electrode mixture slurry" refers to a slurry that includes a dispersion medium in addition to the "electrode mixture" and can be applied and dried to form an electrode active material layer.

In the present disclosure, the "electrode mixture" may be a "positive electrode mixture" or a "negative electrode mixture", particularly a "negative electrode mixture".

As regards the alloy-based electrode active material particles, reference may be made to the following description of the electrode active material layer of the present disclosure.

The dispersion medium is not particularly limited. as long as the alloy-based electrode active material particles can be dispersed therein.

In the method of the present disclosure, the ratio of the d50 particle diameter of the alloy-based electrode active material particles to the thickness of the electrode active material layer is from 0.10 to 0.50. When this ratio is within the above range, i.e., when the d50 particle diameter of the alloy-based electrode active material particles is relatively large with respect to the thickness of the electrode active material layer, the influence of expansion and contraction of the alloy-based electrode active material particles is particularly large. Therefore, there is a significance of producing the electrode active material layer by the method of the present disclosure.

This ratio may be from 0.15 to 0.45 or from 0.20 to 0.40. This ratio may be 0.10 or more, 0.15 or more, 0.20 or more, 0.25 or more, or 0.30 or more, and may be 0.50 or less, 0.45 or less, 0.40 or less, or 0.35 or less.

In the method of the present disclosure, the alloy-based electrode active material particles may have a d50 particle diameter of 5 µm to 15 µm, and the electrode active material layer has a thickness of 10 µm to 100 µm.

In the method of the present disclosure, the d50 particle diameter of the alloy-based electrode active material particles may be from 5 µm to 15 µm, from 6 µm to 12 µm, or from 7 µm to 10 µm. The d50 particle diameter may be 4 µm or more, 5 µm or more, 6 µm or more, 7 µm or more, 8 µm or more, or 9 µm or more, and may be 15 µm or less, 12 µm or less, 10 µm or less, 9 µm or less, 8 µm or less, 7 µm or less, 6 µm or less, or 5 µm or less. When the d50 particle diameter is within the above range, there is a great significance in producing the electrode active material layer by the method of the present disclosure.

The d50 particle diameter of the alloy-based electrode active material particles can be measured with a laser diffraction-scattering particle size analyzer (Partica LA-960V2, manufactured by HORIBA, Ltd.).

In the method of the present disclosure, the thickness of the electrode active material layer may be from 10 µm to 100 µm, from 20 µm to 75 µm, or from 25 µm to 50 µm. The thickness of the electrode active material layer may be 10 µm or more, 15 µm or more, 20 µm or more, or 25 µm or more, and may be 100 µm or less, 75 µm or less, 50 µm or less, 40 µm or less, or 30 µm or less. When the thickness is within the above range, there is a great significance in producing the electrode active material layer by the method of the present disclosure.

The thickness of the electrode active material layer can be determined from a cross-sectional SEM image of the electrode active material layer taken with a scanning electron microscope (SEM).

### <Formation of First Preliminary Electrode Active Material Layer>

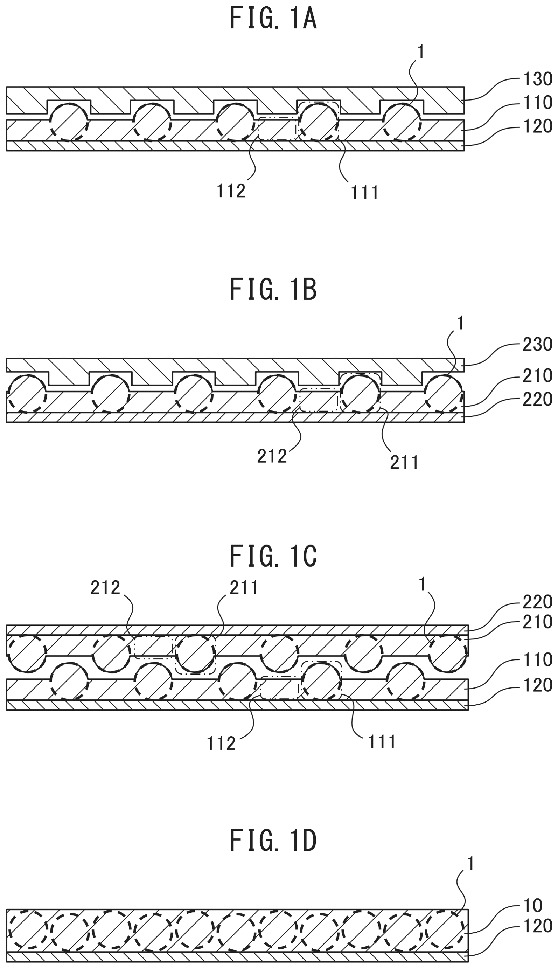

Fig. 1A is a schematic view illustrating a method for forming a first preliminary electrode active material layer 110. As illustrated in Fig. 1A, the method of the present disclosure includes blade-coating an electrode mixture slurry on a first substrate 120 by a first blade 130 having irregularities extending in a width direction of an electrode active material layer to form a first preliminary electrode active material layer 110 having a plurality of first thick film portions 111 and a plurality of first thin film portions 112 on the first substrate 120. Thus, in the first preliminary electrode active material layer 110, the alloy-based electrode active material particles 1 having relatively large particle diameters are disposed in the plurality of first thick film portions 111, and the alloy-based electrode active material particles 1 having relatively small particle diameters are disposed in the plurality of first thin film portions 112.

In the present disclosure, the "first thick film portion" is a portion formed by the concave portion of the first blade 130, and the "first thin film portion" is a portion formed by the convex portion of the first blade 130.

In Fig. 1A, the alloy-based electrode active material particles 1 having relatively large particle diameters each are schematically shown as one coarse particle, but a plurality of the alloy-based electrode active material particles having relatively large particle diameters may be present in the first thick film portion 111. Although not illustrated, a plurality of alloy-based electrode active material particles having relatively small particle diameters may be present in the first thin film portion 112. In Fig. 1A, for the sake of clarity, the reference signs of the alloy-based electrode active material particles 1, and the first thick film portion 111 and the first thin film portion 112 are shown only at one place. The same applies to the alloy-based electrode active material particles 1, the second thick film portion 211, and the second thin film portion 212 in Fig. 1B described later.

The height of the gap between the concave portion and the convex portion of the first blade 130, i.e., the distance from the first substrate 120 is not particularly limited, and can be appropriately set in consideration of the size of the alloy-based electrode active material particles 1 to be used, the thickness of the electrode active material layer 10, and the like. For example, the value of the height of the gap in the concave portion of the first blade 130 may be larger than the d50 particle diameter and/or the d90 particle diameter of the alloy-based electrode active material particles 1. The value of the height of the gap in the convex portion of the first blade 130 may be smaller than the d50 particle diameter and/or the d10 particle diameter of the alloy-based electrode active material particles 1. The same applies to the height of the gap between the concave portion and the convex portion of the second blade 230 described later.

The width of each of the concave portion and the convex portion of the first blade 130 is not particularly limited, and can be appropriately set in consideration of the size and the like of the alloy-based electrode active material particles 1 to be used. For example, the value of the width in the concave portion of the first blade 130 may be larger than the d50 particle diameter and/or the d90 particle diameter of the alloy-based electrode active material particles 1. The same applies to the width of each of the concave portion and the convex portion of the second blade 230 described later.

The cross-sectional shape of the irregularities of the first blade 130 may be linear as illustrated in Fig. 1A, but is not limited thereto, and may be curved. The same applies to the cross-sectional shape of the second blade 230 described later.

The thickness, shape, number, and the like of the first thick film portion 111 and the first thin film portion 112 are not particularly limited, and can be adjusted by the height of the gap between the concave and the convex portions of the first blade 130, the cross-sectional shape of the concave and the convex portions of the first blade 130, the number of the concave and the convex portions of the first blade 130, and the like. The same applies to the thickness, shape, number, and the like of the second thick film portion 211 and the second thin film portion 212 described later.

The first substrate 120 is not particularly limited, and may be, for example, a current collector layer or a release sheet. As regards the current collector layer, reference may be made to the following descriptions of the negative electrode current collector layer and positive electrode current collector layer. The release sheet is not particularly limited, and may be, for example, a polymer foil made of a material such as polyethylene terephthalate (PET) or a metal foil made of a material such as aluminum. The same applies to the cross-sectional shape of the second substrate 220 described later.

When the first substrate 120 or the second substrate 220 is a current collector layer, the second substrate 220 or the first substrate 120 may be a release sheet. In this case, a laminate of the electrode active material layer 10 and the current collector layer produced by the method of the present disclosure can be obtained by peeling off the release sheet from the second substrate 220 or the first substrate 120.

When the first substrate 120 and the second substrate 220 are both release sheets, a laminate of the electrode active material layer 10 and the current collector layer produced by the method of the present disclosure can be obtained by peeling off one release sheet, transferring the electrode active material layer to the current collector layer, and then peeling off the other release sheet.

### <Formation of Second Preliminary Electrode Active Material Layer>

Fig. 1B is a schematic view illustrating a method for forming a second preliminary electrode active material layer 210. As illustrated in Fig. 1B, the method of the present disclosure includes blade-coating an electrode mixture slurry on a second substrate 220 by a second blade 230 having irregularities extending in a width direction of an electrode active material layer to form a second preliminary electrode active material layer 210 having a plurality of second thick film portions 211 and a plurality of second thin film portions 212 on the second substrate 220. Thus, in the second preliminary electrode active material layer 210, the alloy-based electrode active material particles 1 having relatively large particle diameters are disposed in the plurality of second thick film portions 211, and the alloy-based electrode active material particles 1 having relatively small particle diameters are disposed in the plurality of second thin film portions 212.

In the present disclosure, the "second thick film portion" is a portion formed by the concave portion of the second blade 230, and the "second thin film portion" is a portion formed by the convex portion of the second blade 230.

As illustrated in Fig. 1B, the second blade 230 may have a pair of irregularities corresponding to those of the first blade 130, thereby forming, in the first preliminary electrode active material layer 110 and the second preliminary electrode active material layer 210, respectively, a pair of the first thick film portion 111 and the second thin film portion 212 and a pair of the first thin film portion 112 and the second thick film portion 211. However, the present disclosure is not limited to the aspect in which the second blade 230 has a pair of irregularities corresponding to those of the first blade 130, as long as the first preliminary electrode active material layer 110 and the second preliminary electrode active material layer 210 can be laminated so that the first thick film portion 111 and the second thin film portion 212 face each other, and the first thin film portion 112 and the second thick film portion 211 face each other in the section of <Lamination of First and Second Preliminary Electrode Active Material Layers> to be described later.

### <Lamination of First and Second Preliminary Electrode Active Material Layers>

The method of the present disclosure includes laminating the first preliminary electrode active material layer 110 and the second preliminary electrode active material layer 210 so that the first thick film portion 111 and the second thin film portion 212 face each other and the first thin film portion 112 and the second thick film portion 211 face each other. It is considered that by laminating the first preliminary electrode active material layer 110 and the second preliminary electrode active material layer 210 in this manner, the alloy-based electrode active material particles 1 having relatively large particle diameters can be disposed so as not to overlap each other in the thickness direction of the electrode active material layer 10. Accordingly, even when the value of d50 particle diameter/thickness is relatively large, the occurrence of a portion where the influence of expansion and contraction of the alloy-based electrode active material particles 1 locally increases in the width direction of the electrode active material layer 10 can be suppressed.

### <Another Operation>

The method of the present disclosure may further include operations such as pressing and drying after lamination of the first preliminary electrode active material layer 110 and the second preliminary electrode active material layer 210. Specifically, in order to improve the adhesion between the first preliminary electrode active material layer 110 and the second preliminary electrode active material layer 210, these layers may be pressed, and the dispersion medium remaining in the electrode active material layer 10 may be dried and removed.

### <<Electrode Active Material Layer>>

The electrode active material layer of the present disclosure includes alloy-based electrode active material particles. In the electrode active material layer of the present disclosure, the ratio of the average particle diameter of the alloy-based electrode active material particles to the thickness of the electrode active material layer is from 0.20 to 1.0 in the cross-sectional SEM image, the average particle diameter of the alloy-based electrode active material particles is the average value of the particle diameter of at least 5 alloy-based electrode active material particles extracted in descending order of particle diameter in the cross-sectional SEM image, and the cross-sectional SEM image is an image of the electrode active material layer with a width of 2.3 times the thickness of the electrode active material layer. When the cross-sectional SEM image is virtually divided into 12 equal parts in a width direction of the electrode active material layer, the difference between the maximum value and the minimum value of the area proportions of the alloy-based electrode active material particles in the 12 divided regions is 0.40 or less.

When the ratio (hereinafter, sometimes simply referred to as a "value of the predetermined average particle diameter/thickness") of the predetermined average particle diameter of the alloy-based electrode active material particles to the thickness of the electrode active material layer is relatively large, it is considered that a plurality of alloy-based electrode active material particles having relatively large particle diameters are disposed so as to overlap each other in the thickness direction of the electrode active material layer, and as a result, a portion where the influence of expansion and contraction of the alloy-based electrode active material particles is locally large is likely to occur in the width direction of the electrode active material layer.

In contrast, the present inventors have found that the electrode active material layer of the present disclosure can alleviate the influence of expansion and contraction of the alloy-based electrode active material. The reason for this is not intended to be bound by any theory, but is presumed to be as follows. Specifically, a relatively small difference between the maximum value and the minimum value of the area proportions of the alloy-based electrode active material particles in the divided regions of the predetermined cross-sectional SEM image is considered to indicate that the alloy-based electrode active material particles are relatively uniformly present in the electrode active material layer. It is considered that, even when the value of predetermined average particle diameter/thickness is relatively large, the occurrence of a portion where the influence of expansion and contraction of the alloy-based electrode active material particles locally increases in the width direction of the electrode active material layer can be suppressed.

### <Alloy-based Electrode Active Material Particles>

The electrode active material layer of the present disclosure includes alloy-based electrode active material particles. The alloy-based electrode active material particles undergo expansion and contraction in response to charging and discharging of the battery.

In the electrode active material layer of the present disclosure, the alloy-based electrode active material particles may each be an electrode active material primary particle or a secondary particle including a plurality of electrode active material primary particles.

The alloy-based electrode active material particles may each be particularly the secondary particle. Accordingly, the d50 particle diameter of the alloy-based electrode active material particles and the predetermined average particle diameter can be easily maintained within a suitable range. Furthermore, the voids between the primary particles can alleviate the influence of expansion and contraction of the alloy-based electrode active material particles. The number of voids, porosity, size of the voids, and the like in the secondary particle are not particularly limited, and can be appropriately set in consideration of the magnitude of expansion and contraction of the alloy-based electrode active material and the like. In addition, the d50 particle diameter of the primary particles can be appropriately set in consideration of a desired d50 particle diameter of the secondary particles, the predetermined average particle diameter, and the like.

The alloy-based electrode active material particles are not particularly limited, and may be, for example, silicon alloy-based electrode active material particles or tin alloy-based electrode active material particles.

Examples of the material of the silicon alloy-based electrode active material particles include silicon, silicon oxide, silicon carbide, silicon nitride, and a solid solution thereof.

Examples of the material of the tin alloy-based electrode active material particles include tin, tin oxide, tin nitride, or a solid solution thereof.

In the electrode active material layer of the present disclosure, the material of the silicon alloy-based electrode active material particles may be silicon. Specifically, the alloy-based electrode active material particles may be silicon electrode active material particles.

When the alloy-based electrode active material particles are silicon electrode active material primary particles, the composition thereof is not particularly limited, as long as it contains silicon. The proportion of silicon in all elements contained in the primary particles may be, for example, 50 mol% or more, 70 mol% or more, 90 mol% or more, 95 mol% or more, or 99 mol% or more. The primary particles may or may not contain an element other than silicon. Examples of the other element include Sn, Fe, Co, Ni, Ti, Cr, B, and P, in addition to Li. This primary particles may include an oxide of silicon.

The silicon electrode active material primary particles may be amorphous or crystalline. The crystal phase included in the silicon is not particularly limited.

The silicon electrode active material primary particles may be porous silicon electrode active material primary particles. Specifically, the silicon electrode active material primary particles may each have a plurality of pores. As a result, when the alloy-based electrode active material particles are the secondary particles, the influence of expansion and contraction of silicon can be alleviated not only by voids in the secondary particles but also by the pores of the silicon. The number of pores, pore volume, pore diameter, and the like of the porous silicon electrode active material primary particles are not particularly limited, and can be appropriately set in consideration of the magnitude of expansion and contraction of silicon and the like. The pore diameter may be, for example, on the order of nanometers.

When the alloy-based electrode active material particles are the secondary particles, the secondary particles may further contain a binder. The binder can bind a plurality of alloy-based electrode active material primary particles to each other.

The binder is not particularly limited, and may be, for example, a butadiene rubber (BR)-based binder, a butylene rubber (IIR)-based binder, an acrylate butadiene rubber (ABR)-based binder, a styrene butadiene rubber (SBR)-based binder, a polyvinylidene fluoride (PVdF)-based binder, a polytetrafluoroethylene (PTFE)-based binder, a polyimide (PI)-based binder, a carboxymethyl cellulose (CMC)-based binder, a polyacrylic acid salt-based binder, a polyacrylic acid ester-based binder, or a combination thereof.

The content of the binder in the secondary particles is not particularly limited, and can be appropriately set in consideration of desired binding properties and the like.

For example, the alloy-based electrode active material secondary particles can be produced by a method including the steps of:
providing a slurry containing alloy-based electrode active material primary particles and a dispersion medium; and
drying and removing the dispersion medium by spray drying.

Reference may be made to the above description regarding the alloy-based electrode active material primary particles.

The dispersion medium is not particularly limited, as long as the alloy-based electrode active material primary particles can be dispersed therein.

When the alloy-based electrode active material secondary particles further include a binder, the dispersion medium is not particularly limited, as long as it can disperse the alloy-based electrode active material primary particles and dissolve or disperse the binder. When the binder is further contained in the slurry, the alloy-based electrode active material secondary particles further containing the binder can be produced.

Reference may be made to the above description regarding the binder.

The d50 particle diameter of the alloy-based electrode active material particles and the predetermined average particle diameter can be controlled by adjusting the solid concentration of the slurry, the liquid feed rate of the slurry in spray drying, the spray pressure, the drying temperature, and the like.

The content of the alloy-based electrode active material particles in the electrode active material layer is not particularly limited, and can be appropriately set in consideration of a desired battery capacity and the like.

### <Additional Component>

The electrode active material layer of the present disclosure may optionally further include a solid electrolyte, a conductive additive, a binder, and the like. When the electrode active material layer of the present disclosure is produced by the method of the present disclosure for producing the electrode active material layer, another component, in addition to the alloy-based electrode active material particles and the dispersion medium, is further incorporated into the electrode mixture slurry to obtain an electrode active material layer further containing the additional component.

### (Solid Electrolyte)

Examples of the solid electrolyte include inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte may be, in particular, a sulfide solid electrolyte.

For example, when the battery is a lithium ion secondary battery, the solid electrolyte may have lithium ionic conductivity.

Examples of the sulfide solid electrolyte having lithium ionic conductivity include a solid electrolyte containing a Li element, an X element (X represents at least one of P, As, Sb, Si, Ge, Sn, B, Al, Ga, and In), and a S element. The sulfide solid electrolyte may further contain at least one of an O element and a halogen element. Examples of the halogen element include an F element, a Cl element, a Br element, and an I element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂₋LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers; and Z represents any of Ge, Zn, and Ga), Li₂S-GeS₂, Li₂S-SiS₂-Li₃PO₄, and Li₂S-SiS₂-LiₓMO_{y} (where x and y are positive numbers; and M represents any one of P, Si, Ge, B, Al, Ga, and In).

Examples of the oxide solid electrolyte having lithium ionic conductivity include a solid electrolyte containing a Li element, a Y element (Y represents at least one of Nb, B, Al, Si, P, Ti, Zr, Mo, W, and S), and an O element. Specific examples thereof include gamet-type solid electrolytes such as Li₇La₃Zr₂O₁₂, Li₇₋ₓLa₃(Zr₂₋ₓNbₓ)O₁₂ (0≤x≤2), and Li₅La₃Nb₂O₁₂; perovskite-type solid electrolytes such as (Li,La)TiO₃, (Li,La)NbO₃, and (Li,Sr)(Ta,Zr)O₃; nasicon-type solid electrolytes such as Li(Al,Ti)(PO₄)₃ and Li(Al,Ga)(PO₄)₃; Li-P-O-based solid electrolytes such as Li₃PO₄ and LIPON (compound in which part of O in Li₃PO₄ is substituted with N); and Li-B-O-based solid electrolytes such as Li₃BO₃ and a compound in which a part of O of Li₃BO₃ is substituted with C.

The content of the solid electrolyte in the electrode active material layer is not particularly limited, and can be appropriately set in consideration of the desired ionic conductivity and the like.

### (Conductive Additive)

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fiber (VGCF), carbon nanotube (CNT), or carbon nanofiber (CNF); or a combination thereof. The metal particles may be, for example, nickel, copper, iron, stainless steel, or a combination thereof.

The content of the conductive additive in the electrode active material layer is not particularly limited, and can be appropriately set in consideration of the desired conductivity and the like.

### (Binder)

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), or ethylene propylene rubber; a fluoride-based binder such as polyvinylidene fluoride (PVdF), a polyvinylidene fluoride-polyhexafluoropropylene copolymer (PVdF-HFP), polytetrafluoroethylene, or fluororubber, a polyolefin-based thermoplastic resin such as polyethylene, polypropylene, or polystyrene, an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode active material layer is not particularly limited, and can be appropriately set in consideration of desired binding properties and the like.

The electrode active material layer may or may not further contain a component other than the above.

### <Various Parameters>

In the electrode active material layer of the present disclosure, a ratio of the average particle diameter of the alloy-based electrode active material particles to the thickness of the electrode active material layer is from 0.20 to 1.0 in the cross-sectional SEM image. The average particle diameter of the alloy-based electrode active material particles is the average value of the particle diameter of at least 5 alloy-based electrode active material particles extracted in descending order of particle diameter in the cross-sectional SEM image, and the cross-sectional SEM image is an image of the electrode active material layer with a width of 2.3 times the thickness of the electrode active material layer. When this ratio is within the above range, i.e., when the average particle diameter of the alloy-based electrode active material particles is relatively large with respect to the thickness of the electrode active material layer, the influence of expansion and contraction of the alloy-based electrode active material particles is particularly large. Therefore, there is a significance of using the electrode active material layer of the present disclosure.

The ratio of the average particle diameter of the alloy-based electrode active material particles to the thickness of the electrode active material layer may be from 0.20 to 0.80, from 0.25 to 0.60, or from 0.30 to 0.40. This ratio may be 0.20 or more, 0.25 or more, or 0.30 or more, and may be 0.80 or less, 0.60 or less, 0.50 or less, 0.45 or less, 0.40 or less, or 0.35 or less.

The average particle diameter of the alloy-based electrode active material particles may be 5 µm or more, 7 µm or more, 8 µm or more, 9 µm or more, or 10 µm or more, and may be 20 µm or less, 17 µm or less, 15 µm or less, 13 µm or less, 11 µm or less, or 10 µm or less.

Reference may be made to the above description regarding the thickness of the electrode active material layer.

In the electrode active material layer of the present disclosure, when the cross-sectional SEM image is virtually divided into 12 equal parts in a width direction of the electrode active material layer, the difference between the maximum value and the minimum value of the area proportions of the alloy-based electrode active material particles in the 12 divided regions is 0.40 or less. The difference being within the above range means that the alloy-based electrode active material particles are relatively uniformly present in the electrode active material layer. Therefore, such an electrode active material layer can alleviate the influence of expansion and contraction of the alloy-based electrode active material particles.

The difference between the maximum value and the minimum value of the area proportions of the alloy-based electrode active material particles may be 0, may be more than 0, 0.01 or more, 0.05 or more, 0.10 or more, 0.15 or more, or 0.20 or more, and may be 0.35 or less, 0.30 or less, 0.25 or less, or 0.23 or less. This can effectively alleviate the influence of expansion and contraction of the alloy-based electrode active material particles.

The area proportions of the alloy-based electrode active material particles in the 12 divided regions can be calculated by subjecting the cross-sectional SEM image provided with the 12 divided regions to image analysis using image processing software Image-J (Ver. 1.54f).

The interquartile range of the area proportions of the alloy-based electrode active material particles in the divided regions of the cross-sectional SEM image is 0.15 or less. The interquartile range may be 0, more than 0, 0.01 or more, or 0.05 or more, and may be 0.15 or less, 0.12 or less, 0.10 or less, or 0.08 or less. This can effectively alleviate the influence of expansion and contraction of the alloy-based electrode active material particles.

In the present disclosure, the term "interquartile range" means a variation from the median, and therefore, the smaller the value, the more preferable.

The variance of the area proportions of the alloy-based electrode active material particles in the divided regions of the cross-sectional SEM image may be 0.015 or less. The variance may be 0, more than 0, 0.001 or more, 0.002 or more, 0.003 or more, 0.004 or more, or 0.005 or more, and may be 0.015 or less, 0.012 or less, 0.010 or less, 0.009 or less, 0.008 or less, 0.007 or less, or 0.006 or less. This can effectively alleviate the influence of expansion and contraction of the alloy-based electrode active material particles.

In the present disclosure, the term "variance" means a variation from an average value, and therefore, the smaller the value, the more preferable.

The area proportion of the alloy-based electrode active material particles in the entire cross-sectional SEM image may be 0.30 or more, 0.40 or more, 0.45 or more, or 0.50 or more, and may be 0.70 or less, 0.60 or less, or 0.55 or less.

The maximum value of the area proportions of the alloy-based electrode active material particles in the divided regions of the cross-sectional SEM image may be 0.55 or more, 0.60 or more, or 0.65 or more, and may be 0.75 or less, or 0.70 or less. This can effectively alleviate the influence of expansion and contraction of the alloy-based electrode active material particles.

The value obtained by dividing the area proportion of the alloy-based electrode active material particles in the entire cross-sectional SEM image by the maximum value of the area proportions of the alloy-based electrode active material particles in the divided regions of the cross-sectional SEM image is 0.70 or more. This value may be 0.70 or more, 0.71 or more, 0.72 or more, 0.73 or more, or 0.74 or more, and may be 0.90 or less, 0.85 or less, 0.80 or less, or 0.75 or less. This can effectively alleviate the influence of expansion and contraction of the alloy-based electrode active material particles.

The electrode active material layer of the present disclosure can be produced by the method of the present disclosure for producing an electrode active material layer.

### <<Battery>>

The battery of the present disclosure includes the electrode active material layer of the present disclosure. The battery of the present disclosure may include a negative electrode current collector layer, a negative electrode active material layer, an electrolyte layer, a positive electrode active material layer, and a positive electrode current collector layer in this order. In the battery of the present disclosure, the positive electrode active material layer or the negative electrode active material layer may be the electrode active material layer of the present disclosure, and in particular, the negative electrode active material layer may be the electrode active material layer of the present disclosure.

The battery of the present disclosure may be a liquid-based battery or a solid-state battery, particularly a solid-state battery. In the present disclosure, the "solid-state battery" means a battery including at least a solid electrolyte as an electrolyte, and therefore the solid-state battery may include a combination of a solid electrolyte and a liquid electrolyte as an electrolyte. The solid-state battery may be an all-solid-state battery, i.e., a battery including only a solid electrolyte as the electrolyte.

The battery of the present disclosure may be a secondary battery, particularly a lithium ion secondary battery.

The battery of the present disclosure may be restrained by a restraint member, such as an end plate, from both sides in the stacking direction of the layers. Examples of the restraint method include, but are not limited to, a method using the restraint torque of the bolt.

Hereinafter, each element constituting the battery of the present disclosure will be described. In particular, a case wherein the battery of the present disclosure is an all-solid-state battery and the electrode active material layer of the present disclosure is a negative electrode active material layer will be described below as an example.

### <Negative Electrode Current Collector Layer>

The negative electrode current collector layer may have a foil shape, a plate shape, a mesh shape, a perforated metal shape, a foam, or the like. The negative electrode current collector layer may be a metal foil, a metal mesh, or a carbon sheet, particularly a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some layer may be provided between the plurality of metal foils.

The thickness of the negative electrode current collector layer is not particularly limited, and may be, for example, 0.1 µm or more, or 1 µm or more, and may be 1 mm or less, or 100 µm or less.

### <Negative Electrode Active Material Layer>

The negative electrode active material layer is the electrode active material layer of the present disclosure. Reference may be made to the above description regarding the electrode active material layer of the present disclosure.

### <Solid Electrolyte Layer>

The solid electrolyte layer includes at least solid electrolyte particles and may optionally further include a binder and the like.

Reference may be made to the above description regarding the solid electrolyte particles and the binder.

The thickness of the solid electrolyte layer is not particularly limited, and may be, for example, 0.1 µm or more and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. A coating layer containing a Li-ion conductive oxide such as LiNbO₃ may be formed on the surface of the active material.

The content of the positive electrode active material in the positive electrode active material layer is not particularly limited.

Reference may be made to the above description regarding the solid electrolyte, conductive additive, and binder.

The thickness of the positive electrode active material layer is not particularly limited, and may be, for example, 0.1 µm or more and 1000 µm or less.

### <Positive Electrode Current Collector Layer>

The positive electrode current collector layer may have a foil shape, a plate shape, a mesh shape, a perforated metal shape, a foam, or the like. The positive electrode current collector layer may be a metal foil or a metal mesh, particularly a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some layer may be provided between the plurality of metal foils.

The thickness of the positive electrode current collector layer is not particularly limited, and may be, for example, 0.1 µm or more, or 1 µm or more, and may be 1 mm or less, or 100 µm or less.

### <Additional Configuration>

The battery may be one in which each of the above-described configurations is housed inside the outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

The method for producing the battery of the present disclosure is not particularly limited, and includes, for example, forming a negative electrode active material layer containing the electrode mixture of the present disclosure.

Examples of the method of forming the negative electrode active material layer containing the electrode mixture include a method of mixing constituent materials such as alloy-based electrode active material particles to obtain an electrode mixture, the obtained electrode mixture being subjected to dry molding or wet molding.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Examples>>

### <Preparation of Alloy-based Electrode Active Material Secondary Particles>

Silicon primary particles were added to a solution in which a binder was dissolved or dispersed in an organic solvent as a dispersion medium to obtain a slurry. The organic solvent in the slurry was dried and removed by spray drying to produce silicon electrode active material secondary particles as alloy-based electrode active material secondary particles.

The d50 particle diameter of the silicon electrode active material secondary particles was measured with a laser diffraction-scattering particle size analyzer (Partica LA-960V2, manufactured by HORIBA, Ltd.). The d50 particle diameter of the silicon electrode active material secondary particles was 9.4 µm.

### <Production of Negative Electrode Active Material Layer>

### (Provision of Slurry)

The obtained silicon electrode active material secondary particles, binder, conductive additive, and solid electrolyte were added to an organic solvent to prepare a mixed solution. The mixed solution was kneaded using an ultrasonic homogenizer to obtain a negative electrode mixture slurry.

### (Formation of First Preliminary Negative Electrode Active Material Layer)

As illustrated in Fig. 1A, the obtained negative electrode mixture slurry was blade-coated on a nickel foil as a negative electrode current collector layer by a first blade having irregularities extending in the width direction of the electrode active material layer. Thus, a first preliminary negative electrode active material layer having a plurality of first thick film portions and a plurality of first thin film portions was formed on the negative electrode current collector layer.

### (Formation of Second Preliminary Negative Electrode Active Material Layer)

As illustrated in Fig. 1B, the obtained negative electrode mixture slurry was blade-coated on a PET foil as a release sheet by a second blade having irregularities extending in the width direction of the electrode active material layer. Thus, a second preliminary negative electrode active material layer having a plurality of second thick film portions and a plurality of second thin film portions was formed on the release sheet.

### (Lamination of First and Second Preliminary Negative Electrode Active Material Layers)

As illustrated in Figs. 1C and 1D, the first preliminary negative electrode active material layer and the second preliminary negative electrode active material layer were laminated so that the first thick film portion and the second thin film portion face each other, and the first thin film portion and the second thick film portion face each other to peel off the PET foil. Thus, a negative electrode laminate in which the negative electrode current collector layer and the negative electrode active material layer were laminated was obtained. The obtained negative electrode laminate was formed into a strip shape.

The thickness of the negative electrode active material layer determined from a cross-sectional SEM image taken with a scanning electron microscope (SEM) was 27.5 µm. Therefore, the value of the d50 particle diameter of the silicon electrode active material particles/thickness of negative electrode active material layer was 0.34.

### <Production of Solid Electrolyte Layer>

A binder and a solid electrolyte were added to an organic solvent to prepare a mixed solution. The mixed solution was kneaded using an ultrasonic homogenizer to obtain a solid electrolyte mixture slurry. The obtained solid electrolyte mixture slurry was applied to an aluminum (Al) foil as a release sheet to produce a solid electrolyte layer. A total of three solid electrolyte layers were produced in the same procedure and formed into a strip shape.

### <Production of Positive Electrode Active Material Layer>

A binder, conductive additive, solid electrolyte, and LiNi_{0.8}Co_{0.15}Mn_{0.05}O₂ as a positive electrode active material were added to an organic solvent to prepare a mixed solution. The mixed solution was kneaded using an ultrasonic homogenizer to obtain a positive electrode mixture slurry. The obtained positive electrode mixture slurry was applied to an Al foil as a positive electrode current collector layer to produce a positive electrode active material layer. Thus, a positive electrode laminate in which the positive electrode current collector layer and the positive electrode active material layer were laminated was obtained, and the positive electrode laminate was formed into a strip shape.

### <Production of Battery>

The negative electrode laminate and the first solid electrolyte layer were laminated so that the negative electrode active material layer and the solid electrolyte layer faced each other, and roll-pressed at 25°C and a pressure of 50 kN/cm. The solid electrolyte layer was transferred onto the negative electrode active material layer by peeling off the Al foil as a release sheet from the solid electrolyte layer.

The positive electrode laminate and the second solid electrolyte layer were laminated so that the positive electrode active material layer and the solid electrolyte layer faced each other and roll-pressed at 165°C and a pressure of 50 kN/cm. The solid electrolyte layer was transferred onto the positive electrode active material layer by peeling off the Al foil as a release sheet from the solid electrolyte layer.

The negative electrode laminate to which the solid electrolyte layer was transferred and the positive electrode laminate to which the solid electrolyte layer was transferred were punched with a punching machine having a size of φ 13.00 mm and φ 11.28 mm, respectively.

The third solid electrolyte layer punched out to a predetermined size was further transferred onto the first solid electrolyte layer laminated on the negative electrode active material layer using a uniaxial press machine. The negative electrode laminate and the positive electrode laminate were laminated so that the solid electrolyte layer on the negative electrode active material layer and the solid electrolyte layer on the positive electrode active material layer faced each other.

A current extraction tab was attached to the positive electrode active material layer and the negative electrode active material layer, and the resultant was sealed in an Al laminate using a vacuum laminate sealer and restrained at a pressure of 5 MPa to produce an all-solid-state battery.

### <<Comparative Examples>>

A negative electrode active material layer and an all-solid-state battery were obtained in the same manner as in Examples, except that in the production of the negative electrode active material layer, the negative electrode mixture slurry was blade-coated on a nickel foil as a negative electrode current collector layer by a blade having no irregularities to form the negative electrode active material layer on the negative electrode current collector layer so as to have the same thickness as in Examples.

### <<Evaluation>>

### <Area Proportions of Silicon Electrode Active Material Particles in Divided Regions>

Cross-sectional SEM images of the negative electrode active material layers of Examples and Comparative Examples were taken using a scanning electron microscope (SEM) with a measurement magnification set to 2000 times. The width of the images was 2.3 times the thickness of the electrode active material layer.

In the cross-sectional SEM image, the ratio of the average particle diameter of the silicon electrode active material secondary particles to the thickness of the negative electrode active material layer was calculated. It should be noted that the average particle diameter of the silicon electrode active material secondary particles is defined as the average value of the particle diameters of 5 silicon electrode active material secondary particles, extracted in order from the largest particle diameter, in the cross-sectional SEM image.

In the entire image, the area proportion of the silicon electrode active material secondary particles was calculated. The area proportions of the silicon electrode active material secondary particles in Examples and Comparative Examples were 0.51 and 0.53, respectively.

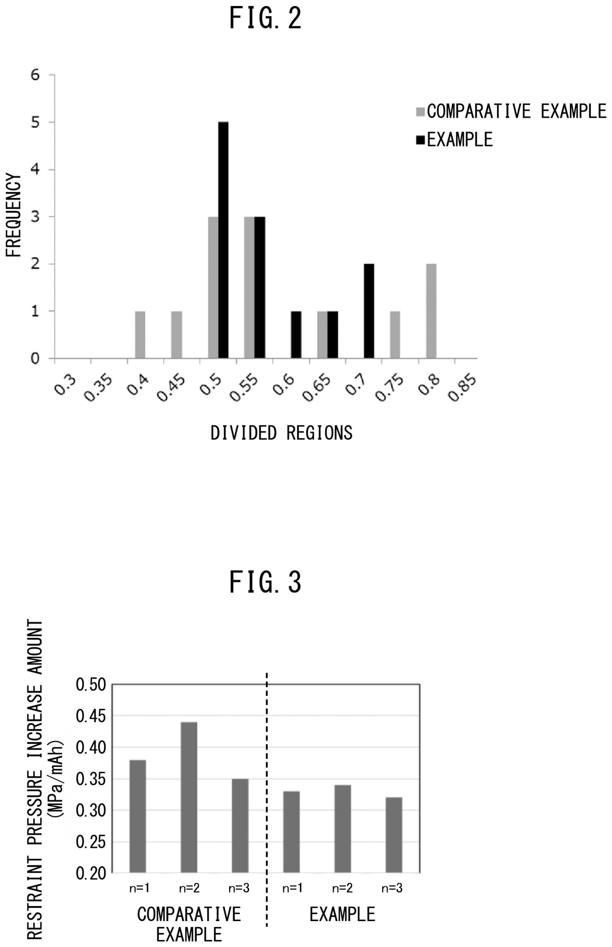

The image was virtually divided into 12 equal parts in the width direction of the negative electrode active material layer to provide divided regions. The cross-sectional SEM image was subjected to image analysis using image processing software Image-J (Ver. 1.54f), and the area proportions of the silicon electrode active material particles in the 12 divided regions were calculated. Based on these area proportions, the difference between the maximum value and the minimum value, the interquartile range and the variance of the area proportions in the divided regions, were calculated. The maximum values in Examples and Comparative Examples were 0.69 and 0.79. Fig. 2 shows a histogram of these area proportions.

### <Restraint Pressure Increase Amount>

The restraint pressure increase amount when the obtained all-solid-state battery was charged from the uncharged state to 4.05 V was measured using a load cell. In this manner, the restraint pressure increase amount was measured three times in total. The restraint pressure increase amount means the expansion amount of the silicon electrode active material secondary particles.

The evaluation results of each example are shown in Table 1 and Figs. 2 and 3.

### [Table 1]

**Table 1**

| | Production condition | Particle diameters of electrode active material particles, thickness of electrode active material layer, and ratio thereof | | | | | Area proportion [-] | | | | Restraint pressure increase amount [-] | | | |
|---|---|---|---|---|---|---|---|---|---|---|---|---|---|---|
| | Blade irregularity | d50 Particle diameter [µm] | Thickness [µm] | d50 Particle diameter/ thickness [-] | Average particle diameter [µm] | Average particle diameter/ thickness [-] | Maximum value - minimum value | Interquartile range | Variance | Total/ maximum value | n = 1 | n = 2 | n = 3 | Average value |
| Example | Present | 9.4 | 27.5 | 0.34 | 9.1 | 0.33 | 0.23 | 0.08 | 0.005 | 0.74 | 0.33 | 0.34 | 0.32 | 0.33 |
| Comparative Example | None | 9.1 | 33.5 | 0.27 | 9.5 | 0.28 | 0.44 | 0.19 | 0.019 | 0.67 | 0.38 | 0.44 | 0.35 | 0.39 |

As shown in Table 1, in the negative electrode active material layers of Examples, the difference between the maximum value and the minimum value, the interquartile range and the variance of the area proportions of the silicon electrode active material particles in the 12 divided regions, and the value obtained by dividing the area proportion of the silicon electrode active material particles in the entire cross-sectional SEM image by the maximum value of the area proportions of the silicon electrode active material particles in the divided regions of the cross-sectional SEM image were within the range of the present disclosure.

As shown in Fig. 2, in the negative electrode active material layers of Examples, the frequency distribution of the area proportions of the silicon electrode active material particles in the 12 divided regions was relatively sharp.

As shown in Table 1 and Fig. 3, although the value of the d50 particle diameter/thickness in Examples was larger than the value of the d50 particle diameter/thickness in Comparative Examples, the restraint pressure increase amounts of the batteries of Examples were smaller than the restraint pressure increase amounts of the batteries of Comparative Examples.

From the above results, it was confirmed that, in the negative electrode active material layers of Examples produced by the method of the present disclosure, the silicon electrode active material particles were relatively uniformly present in the width direction, and thus, in the batteries of Examples, the restraint pressure increase amount was small.

In the present example, an aspect in which the electrode active material layer produced by the method of the present disclosure is a negative electrode active material layer has been illustrated, but the electrode active material layer may be a positive electrode active material layer.

### REFERENCE SIGNS LIST

- 1: Alloy-based electrode active material particles
- 10: electrode active material layer
- 110: First preliminary electrode active material layer
- 111: First thick film portions
- 112: First thin film portions
- 120: First substrate
- 130: First blade
- 210: Second preliminary electrode active material layer
- 211: Second thick film portions
- 212: Second thin film portions
- 220: Second substrate
- 230: Second blade

## Claims

1. A method for producing an electrode active material layer (10), including:
providing an electrode mixture slurry containing alloy-based electrode active material particles (1) and a dispersion medium, wherein a ratio of a d50 particle diameter of the alloy-based electrode active material particles (1) to a thickness of the electrode active material layer (10) is from 0.10 to 0.50;
blade-coating the electrode mixture slurry on a first substrate (120) with a first blade (130) having irregularities extending in a width direction of the electrode active material layer (10) to form, on the first substrate (120), a first preliminary electrode active material layer (110) having a plurality of first thick film portions (111) and a plurality of first thin film portions (112);
blade-coating the electrode mixture slurry on a second substrate (220) with a second blade (230) having irregularities extending in a width direction of the electrode active material layer (10) to form, on the second substrate (220), a second preliminary electrode active material layer (210) having a plurality of second thick film portions (211) and a plurality of second thin film portions (212); and
laminating the first preliminary electrode active material layer (110) and the second preliminary electrode active material layer (210) so that the first thick film portions (111) and the second thin film portions (212) face each other, and the first thin film portions (112) and the second thick film portions (211) face each other.

2. The method according to claim 1,
wherein the alloy-based electrode active material particles (1) have a d50 particle diameter of 5 µm to 15 µm, and
wherein the electrode active material layer (10) has a thickness of 10 µm to 100 µm.

3. An electrode active material layer (10), including alloy-based electrode active material particles (1), wherein
a ratio of an average particle diameter of the alloy-based electrode active material particles (1) to a thickness of the electrode active material layer (10) is from 0.20 to 1.0 in a cross-sectional SEM image, the average particle diameter of the alloy-based electrode active material particles (1) being an average value of particle diameters of at least 5 alloy-based electrode active material particles (1) extracted in descending order of particle diameter in the cross-sectional SEM image, the cross-sectional SEM image is an image of the electrode active material layer (10) for a width of 2.3 times a thickness of the electrode active material layer (10), and
when the cross-sectional SEM image is virtually divided into 12 equal regions in a width direction of the electrode active material layer, a difference between a maximum value and a minimum value of area proportions of the alloy-based electrode active material particles (1) in the 12 divided regions is 0.40 or less.

4. The electrode active material layer (10) according to claim 3, wherein the difference is 0.25 or less.

5. The electrode active material layer (10) according to claim 3 or 4, wherein an interquartile range of the area proportions of the alloy-based electrode active material particles (1) in the divided regions of the cross-sectional SEM image is 0.15 or less.

6. The electrode active material layer (10) according to any one of claims 3 to 5, wherein a variance of the area proportions of the alloy-based electrode active material particles (1) in the divided regions of the cross-sectional SEM image is 0.015 or less.

7. The electrode active material layer (10) according to any one of claims 3 to 6, wherein a value obtained by dividing an area proportion of the alloy-based electrode active material particles (1) in the entire cross-sectional SEM image by the maximum value of the area proportions of the alloy-based electrode active material particles (1) in the divided regions of the cross-sectional SEM image is 0.70 or more.

8. The electrode active material layer (10) according to any one of claims 3 to 7, wherein the alloy-based electrode active material particles (1) are silicon electrode active material particles.

9. The electrode active material layer (10) according to any one of claims 3 to 8, wherein the alloy-based electrode active material particles (1) each are a secondary particle including a plurality of electrode active material primary particles.

10. The electrode active material layer (10) according to claim 9, wherein the secondary particle further includes a binder.

11. A battery, including the electrode active material layer (10) according to any one of claims 3 to 10.

12. The battery according to claim 11, wherein the battery is a solid-state battery.
